# EUROPEAN PATENT SPECIFICATION

(11) **EP 4 195 332 B1**
(45) Date of publication and mention of the grant of the patent: **16.09.2026**
(21) Application number: 22726253.2
(22) Date of filing: 29.03.2022
(51) Int. Cl.: H01M 4/66, H01M 50/581, H01M 10/0525

(54) **CURRENT COLLECTOR, ELECTRODE PLATE, ELECTRODE ASSEMBLY, BATTERY CELL, BATTERY, AND ELECTRICAL DEVICE**
STROMKOLLEKTOR, ELEKTRODENPLATTE, ELEKTRODENANORDNUNG, BATTERIEZELLE, BATTERIE UND ELEKTRISCHE VORRICHTUNG
COLLECTEUR DE COURANT, PLAQUE D'ÉLECTRODE, ENSEMBLE ÉLECTRODE, ÉLÉMENT DE BATTERIE, BATTERIE ET DISPOSITIF ÉLECTRIQUE

(30) Priority: 28.10.2021 CN 202122614507 U
(43) Date of publication of application: 14.06.2023
(73) Proprietor: Contemporary Amperex Technology (Hong Kong) Limited, Central, Central And Western District (HK)
(72) Inventor: LI, Xingxing, Ningde, Fujian 352100 (CN); CHEN, Zhiming, Ningde, Fujian 352100 (CN); HUANG, Xiaoteng, Ningde, Fujian 352100 (CN)
(74) Representative: Barker Brettell LLP
(86) International application number: PCT/CN2022/083779
(87) International publication number: WO 2023/071045

(56) References cited:
- EP-A1- 3 679 614
- CN-A- 102 856 558
- CN-A- 110 943 227
- CN-A- 111 133 618
- CN-A- 112 290 027
- CN-U- 216 120 659
- JP-A- 2017 016 787
- US-A1- 2007 037 060
- US-A1- 2009 317 710
- US-A1- 2019 081 304
- NICOLAS FEDELICH: "Application Handbook Thermal Analysis of Polymers Selected Applications Thermal Analysis", 1 January 2013 (2013-01-01), XP055608279, Retrieved from the Internet <URL:https://www.mt.com/dam/LabDiv/guides-glen/ta-polymer/TA_Polymers_Selected_Apps_EN.pdf> [retrieved on 20190724]

## Description

### TECHNICAL FIELD

The present application relates to the technical field of batteries, and in particular to a current collector, an electrode sheet, an electrode assembly, a battery cell, a battery and an electric apparatus.

### BACKGROUND

With the rapid development of electric apparatus such as electronic products and electric vehicles, batteries have been widely used. However, batteries are prone to short-circuit, causing a thermal runaway, affecting operational safety.

Document EP3679614A1 provides improvements in the structural components and physical characteristics of lithium battery articles. Improvements provided include the utilization of thin metallized current collectors (aluminum and/or copper, as examples), high shrinkage rate materials, materials that become nonconductive upon exposure to high temperatures, and combinations thereof. Such improvements accord the ability to withstand certain imperfections (dendrites, unexpected electrical surges, etc.) within the target lithium battery through provision of ostensibly an internal fuse within the subject lithium batteries themselves that prevents undesirable high temperature results from short circuits.

Document US2009317710A1 provides a process for producing lightweight materials for a battery. The process comprises lightweight polymer substrate coated with dispersions of nano particles, conductive matrixes and active material.

Document US2019081304A1 provides improvements in the structural components and physical characteristics of lithium battery articles. Improvements provided include the utilization of thin metallized current collectors (aluminum and/or copper, as examples), high shrinkage rate materials, materials that become nonconductive upon exposure to high temperatures, and combinations thereof. Such improvements accord the ability to withstand certain imperfections (dendrites, unexpected electrical surges, etc.) within the target lithium battery through provision of ostensibly an internal fuse within the subject lithium batteries themselves that prevents undesirable high temperature results from short circuits.

Document US2007037060A1 provides an all-solid state primary film battery, and a method of manufacturing the same. The all-solid state primary film battery includes: a first polymer current collector film including a first polymer film and a first conductive layer; a first electrode layer formed on the first conductive layer; a second polymer current collector film that includes a second polymer film and a second conductive layer; a second electrode layer formed on the second conductive layer; and a polymer electrolyte layer including aqua-based electrolytic solution, and is formed between the first electrode layer and the second electrode layer.

Document Nicolas Fedelich: "Application Handbook Thermal Analysis of Polymers Selected Applications Thermal Analysis" (URL: https://www.mt.com/dam/LabDiv/guides-glen/ta-polymer/TA Polymers _Selected_Apps_EN.pdf) provides Application Handbook Thermal Analysis of Polymers Selected Applications Thermal Analysis.

### SUMMARY

The present application aims to provide a current collector, an electrode sheet, an electrode assembly, a battery cell, a battery and an electric apparatus with improved safety performance.

The invention is set out in the appended set of claims.

### BRIEF DESCRIPTION OF THE DRAWINGS

In order to explain embodiments of the present application or the technical solutions in the prior art more clearly, the following is a brief introduction to the drawings used in the embodiments or the description of the prior art. Obviously, the drawings in the description below are only some embodiments of the present application, and a person skilled in the art would have been able to obtain other drawings according to these drawings without involving any inventive effort.
Fig. 1 is a schematic structural diagram of an electric apparatus according to an embodiment of the present application.
Fig. 2 is an exploded view of a battery according to an embodiment of the present application.
Fig. 3 is an exploded view of a battery cell according to the embodiment of the present application.
Fig. 4 is a structural diagram of an electrode assembly according to an embodiment of the present application.
Fig. 5 is a schematic view of a current collector according to an embodiment of the present application.
Fig. 6 is a schematic illustration of the principle of the current collector preventing a thermal runaway according to an embodiment of the present application.

Reference Numerals:
100: Electric apparatus; 101: Vehicle; 102: Controller; 103: Power device; 104: Motor; 105: Body;
10: Battery;
20: Battery cell; 201: Electrode assembly; 202: Housing; 203: Casing; 204: End cap; 205: Adapter; 206: Electrode terminal; 207: Tab; 208: Spacer; other forms, the granular conductive layer is more likely to shrink with the support layer when the support layer is heated and shrinks. As such, the circuit can be more rapidly cut off and the thermal runaway can be more timely prevented when a short-circuit accident occurs. Therefore, the safety performance of the battery can be improved more effectively.

Other features and advantages of the present application will become apparent from the following detailed description of exemplary embodiments thereof, which proceeds with reference to the accompanying drawings.

### BRIEF DESCRIPTION OF THE DRAWINGS

In order to explain embodiments of the present application or the technical solutions in the prior art more clearly, the following is a brief introduction to the drawings used in the embodiments or the description of the prior art. Obviously, the drawings in the description below are only some embodiments of the present application, and a person skilled in the art would have been able to obtain other drawings according to these drawings without involving any inventive effort.

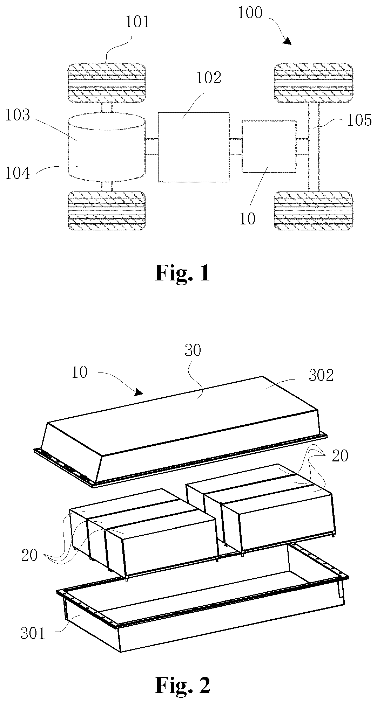

Fig. 1 is a schematic structural diagram of an electric apparatus according to an embodiment of the present application.
Fig. 2 is an exploded view of a battery according to an embodiment of the present application.

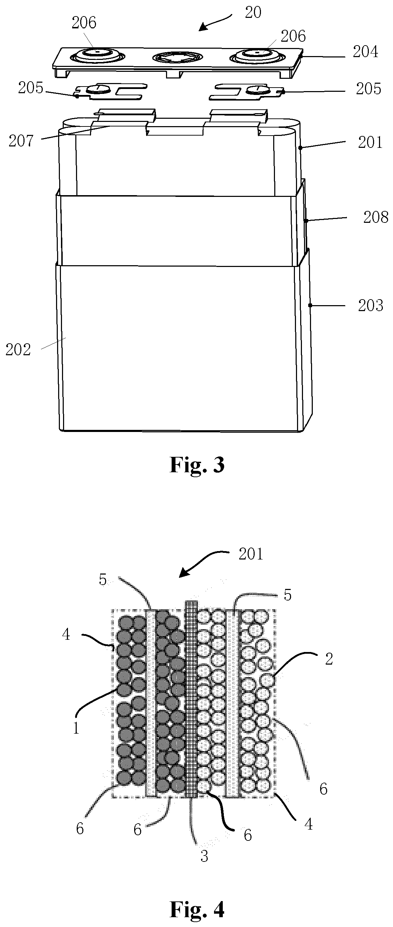

Fig. 3 is an exploded view of a battery cell according to the embodiment of the present application.
Fig. 4 is a structural diagram of an electrode assembly according to an embodiment of the present application.

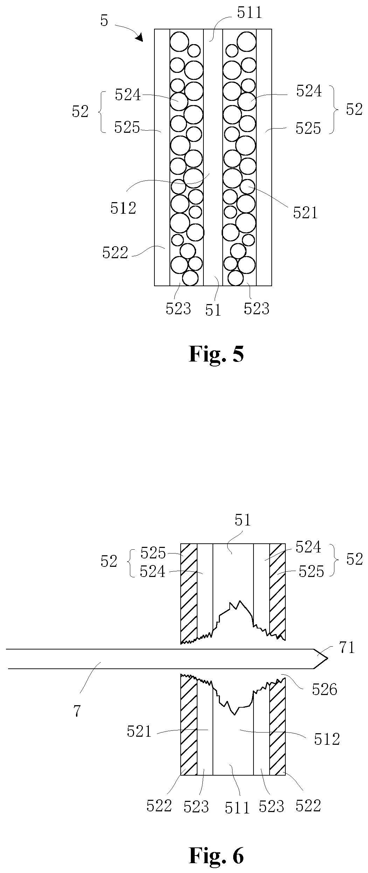

Fig. 5 is a schematic view of a current collector according to an embodiment of the present application.
Fig. 6 is a schematic illustration of the principle of the current collector preventing a thermal runaway according to an embodiment of the present application.

Reference Numerals:
100: Electric apparatus; 101: Vehicle; 102: Controller; 103: Power device; 104: Motor; 105: Body;
10: Battery;
20: Battery cell; 201: Electrode assembly; 202: Housing; 203: Casing; 204: End cap; 205: Adapter; 206: Electrode terminal; 207: Tab; 208: Spacer;
30: Receiving case; 301: Case body; 302: Case cover;
1: Positive electrode sheet;
2: Negative electrode sheet;
3: Diaphragm;
4: Electrode sheet;
5: Current collector; 51: Support layer; 511: Support film; 512: Polyethylene film; 52: Conductive layer; 521: Granular conductive layer; 522: Graphite layer; 523: Metal particle layer; 524: First conductive layer; 525: Second conductive layer; 526: Hole;
6: Active material;
7: Short-circuit initiating piece; 71: Puncture needle.

### DETAILED DESCRIPTION

Technical solutions in embodiments of the present application will be described clearly and completely below in combination with the drawings of the embodiments of the application. Obviously, the described embodiments are only part of the embodiments of the application, not all of the embodiments. The following description of at least one exemplary embodiment is actually only illustrative and in no way serves as any limitation on the application and its application or use.

Techniques, methods, and apparatus known to one of ordinary skill in the art may not be discussed in detail, but should be considered part of the specification where appropriate.

In the description of this application, it should be understood that the orientation or positional relationship indicated by orientation words such as "front, back, up, down, left, right", "horizontal, vertical, perpendicular, horizontal" and "top and bottom" is usually based on the orientation or positional relationship shown in the drawings, which is only for the convenience of describing this application and simplifying the description. Without contrary explanation, these positional words do not indicate and imply that the device or element must have a specific position or be constructed and operated in a specific location, so they cannot be understood as limiting the protection scope of the application. The positional words "inside and outside" refer to the inside and outside of the contour relative to each component itself.

In the description of the present application, it is to be understood that the use of the terms "first", "second" and the like to define a component is merely to facilitate the distinction between the corresponding components. If not otherwise stated, the terms above have no particular meaning and therefore should not be construed as limiting the scope of the present application.

In addition, the technical features involved in the different embodiments of the present application described below can be combined with each other as long as they do not conflict with each other.

At present, batteries have been widely used. Batteries are not only used in energy storage power systems such as hydraulic, fire, wind and solar power plants, but also widely used in electric vehicles such as electric bicycles, electric motorcycles, electric cars, military equipment and aerospace. As battery applications continue to expand, their performance requirements continue to improve.

Safety performance is an important performance index of a battery. During use of the battery, as well as during routine maintenance, it is necessary to prevent thermal runaway accidents. How to prevent the thermal runaway and improve the safety performance is always a difficult problem.

In order to improve the safety performance of a battery, the present application provides a current collector, an electrode assembly, a battery cell, a battery and an electric apparatus.

Fig. 1 to Fig. 6 illustrate configurations of an electric apparatus, a battery, a battery cell, an electrode assembly, and a current collector in some embodiments of the present application.

The present application will described below with reference to Fig. 1 to Fig. 6.

Fig. 1 exemplarily illustrates a configuration of an electric apparatus 100. With reference to Fig. 1, an electric apparatus 100 is an apparatus using a battery cell 20 as a power source, which includes a battery 10 or a battery cell 20. The battery cell 20 is configured to provide power to the electric apparatus 100. Specifically, the electric apparatus 100 includes a body 105 and a battery cell 20. The battery cell 20 is arranged on the body 105 and provides power to the body 105.

The electric apparatus 100 may be various electric devices such as a mobile phone, a tablet, a notebook computer, an electric toy, an electric tool, a battery vehicle, an electric automobile, a ship, a spacecraft, etc. The electric toys may include stationary or mobile electric toys, such as gaming machines, electric car toys, electric boat toys, electric airplane toys, and the like. Spacecraft may include aircraft, rockets, space airplanes and space vehicles, and the like.

The electric apparatus 100 includes a power source that includes a battery 10. The battery 10 provides a driving force for the electric apparatus 100. In some embodiments, the driving force of the electric apparatus 100 is all electrical energy, in which case the power source includes only the battery 10. In other embodiments, the driving force of the electric apparatus 100 includes electrical energy and other sources of energy (for example, mechanical energy), in which case the power source includes the battery 10 and other devices such as an engine.

The case where the electric apparatus 100 is a vehicle 101 is taken as an example. With reference to Fig. 1, in some embodiments, the electric apparatus 100 is a new energy vehicle such as a pure electric vehicle, a hybrid automobile or an extended range automobile, which includes a power apparatus 103 such as the battery 10, a controller 102 and a motor 104. The battery 10 is electrically connected to the power apparatus 103 such as the motor 104 via the controller 102, so that the battery 10 can supply power to the power apparatus 103 such as the motor 104 under the control of the controller 102.

As can be seen, the battery 10 is an important component of the electric apparatus 100.

Fig. 2 exemplarily illustrates the configuration of the battery 10. With reference to Fig. 2, the battery 10 includes a receiving case 30 and the battery cell 20 arranged in the receiving case 30. The receiving case 30 includes a case body 301 and a case cover 302. The case body 301 and the case cover 302 are snap-fitted with each other such that a closed receiving space is formed inside the receiving case 30 to receive the battery cell 20. The number of the battery cells 20 in the receiving case 30 may be at least two, so as to provide more electric power to meet a higher demand for use. The battery cells 20 of the battery 10 may be electrically connected in series, parallel, or series-parallel to achieve greater capacity or power. It will be appreciated that a simplified depiction of battery cell 20 is used in Fig. 2.

As can be seen, the battery cell 20 is the smallest battery unit for providing electric power, which is a core component of the electric apparatus 100 and the battery 10. The performance of the battery cell 20 directly affects the performance of the electric apparatus 100 and the battery 10. Improvement of the safety performance of the battery cell 20 is advantageous in improving the performance of the electric apparatus 100 and the battery 10.

The battery cell 20 may be various types of battery cells such as a lithium ion battery, which may be of various shapes such as a square or a cylindrical shape.

Fig. 3 exemplarily illustrates the configuration of the battery cell 20. With reference to Fig. 3, the battery cell 20 includes a housing 202, an electrode assembly 201, adaptors 205, electrode terminals 206, and a spacer 208.

The housing 202 is configured to receive the electrode assembly 201 and the like, to provide protection for the electrode assembly 201 and the like. The housing 202 includes a casing 203 and an end cap 204. The end cap 204 covers an end opening of the casing 203 such that the inside of the housing 202 forms a closed space for receiving the electrode assembly 201 and the like.

The electrode assembly 201 is configured to generate electric power. The electrode assembly 201 is arranged inside the housing 202 and supplies electric power by electrochemically reacting with an electrolyte injected into the housing 202. The number of electrode assemblies 201 in a battery cell 20 may be one, two, or more according to actual usage requirements. The electric power generated by the electrode assembly 201 is transmitted outwardly through a tab 207.

Tabs 207 are portions of a positive electrode sheet and a negative electrode sheet of the electrode assembly 201 that are not coated with an active material 6. The tabs 207 extend outward from portions of the positive and negative electrode sheets coated with the active material 6, and are electrically connected to an external circuit through the adaptors 205 and the electrode terminals 206, so as to realize the outward transfer of electric power. The tab 207 of the positive electrode sheet is referred to as a positive tab, and the tab 207 of the negative electrode sheet is referred to as a negative tab.

The adaptors 205 are arranged in the housing 202 and are positioned between the tabs 207 of the electrode assembly 201 and the electrode terminals 206. The adaptor 205 is configured to realize an electrical connection between the electrode assembly 201 and the electrode terminal 206, to transfer the electrical power generated by the electrode assembly 201 to the electrode terminal 206. The adaptor 205 corresponding to the positive tab is referred to as a positive adaptor, and the adaptor 205 corresponding to the negative tab is referred to as a negative adaptor.

The electrode terminals 206 are electrically connected to the electrode assembly 201 through the adaptors 205, and are configured to be connected to an external circuit to transfer electric power generated by the electrode assembly 201 to the outside of the battery cell 20. The electrode terminal 206 corresponding to the positive tab is referred to as a positive terminal, and the electrode terminal 206 corresponding to the negative tab is referred to as a negative terminal.

A spacer 208 is arranged in the housing 202 and is between the electrode assembly 201 and the casing 203. The spacer 208 is configured to insulate the electrode assembly 201 from the casing 203, to prevent a short circuit between the electrode assembly 201 and the casing 203.

It can be seen that, the electrode assembly 201 is an important component of the battery cell 20 and is the key for the battery cell 20 to be able to supply electric power.

Fig. 4 further illustrates the configuration of the electrode assembly 201. With reference to Fig. 4, the electrode assembly 201 includes electrode sheets 4, which are two electrode sheets 4 of opposite polarities, including a positive electrode sheet 1 and a negative electrode sheet 2. The positive electrode sheet 1 and the negative electrode sheet 2 are stacked or wound together. A diaphragm 3 is arranged between the positive electrode sheet 1 and the negative electrode sheet 2, which separates the positive electrode sheet 1 and the negative electrode sheet 2.

As illustrated in Fig. 4, each of the positive electrode sheet 1 and the negative electrode sheet 2 includes an active material 6 and a current collector 5. The active material 6 is coated on the current collector 5, and is configured to electrochemically react with the electrolyte in the housing 202 to produce electrical power, so that a charging process or a discharging process is realized. As can be seen in Fig. 4, in some embodiments, the two opposite surfaces of the current collector 5 are coated with the active material 6.

The active materials 6 on the positive electrode sheet 1 and the negative electrode sheet 2 are different, so that the positive electrode sheet 1 and the negative electrode sheet 2 have opposite polarities. For example, in some embodiments, the active material 6 on the positive electrode sheet 1 includes LiCoO2 (lithium containing cobalt dioxide) particles, and the active material 6 on the negative electrode sheet 2 includes SnO2 (tin dioxide) particles.

In the electrode assembly 201, the current collector 5 functions not only to carry the active material 6, but also to collect the electric current generated by the electrochemical reaction to form a large electric current to be outputted. The current collector 5 is an indispensable component of the battery cell 20, and is also an important factor affecting the operational safety of the battery cell 20.

In the related art, the current collector 5 is generally made of a metal material. For example, the current collector 5 of the positive electrode sheet 1 is generally made of an aluminum foil, and the current collector 5 of the negative electrode sheet 2 is generally made of a copper foil. However, the current collector 5 of such metal material is difficult to prevent a thermal runaway when the battery cell 20 is short-circuited, which limits the improvement of the safety performance of the battery cell 20.

The thermal runaway of the battery cell 20 often results from a violent chemical reaction or an electrochemical reaction within the battery cell 20. When the diaphragm 3 in the battery cell 20 is damaged due to internal foreign matters (such as metal particles, burrs on the positive and negative electrode sheets, or metal lithium dendrites precipitated during the use of the battery, etc.) or external punctures, the positive and negative electrode sheets on both sides of the damaged portion may be conducted, and a short circuit may occur. When the short-circuit occurs, the short-circuit current may cause a sharp increase in temperature and cause a more violent reaction, which diffuses to other portions and causes a thermal runaway, thus causing fire or explosion accidents and seriously threatening the personal safety of users.

Due to the high melting point of the metal material, the current collector 5 made of the metal material is not easily melted. Therefore, when the short-circuit occurs, the current collector 5 is not yet melted, and other components of the battery cell 20, such as the active material 6 and the diaphragm 3, have failed. In this case, the current collector 5 cannot block the current transmission and cannot prevent the thermal runaway from occurring, thereby affecting the safety performance of the battery cell 20.

In response to the above situation, the present application improves the configuration of the current collector 5 to improve the safety performance of the current collector 5, the electrode assembly 201, the battery cell 20, the battery 10 and the electric apparatus 100.

Fig. 5 to Fig. 6 exemplarily illustrate the configuration of the current collector 5.

With reference to Fig. 5 and Fig. 6, the current collector 5 provided in an embodiment of the present application includes a support layer 51 and a conductive layer 52. The conductive layer 52 is arranged on at least one of two opposite sides of the support layer 51. When the support layer 51 is heated and shrinks, the conductive layer 52 shrinks with the support layer 51 to form a hole 526 around the heated portion. The conductive layer 52 includes a first conductive layer 524, which is a granular conductive layer 521, in contact with the support layer 51.

It can be seen that, in an embodiment of the present application, the current collector 5 is no longer a single-layer metal foil structure, but becomes a structure that includes at least two layers including the support layer 51 and the conductive layer 52.

Since the melting point of the support layer 51 is low, the support layer 51 may melt when heated, driving the conductive layer 52 to shrink with the support layer 51. The hole 526 is formed around the heated portion. Therefore, when a short circuit occurs during the operation of the battery cell 20, the support layer 51 can cut off the failure circuit by driving the conductive layer 52 to shrink with it due to the high temperature at the failure position, to form the hole 526 around the failure position, so as to prevent the occurrence of a thermal runaway. With reference to Fig. 6, when the hole 526 is formed, there is no more conductor around the short-circuit initiating piece 7 (for example, a puncture needle 71, a metal particle or a burr) causing the short-circuit. The short-circuit initiating piece 7 can no longer be in contact with the conductor. Therefore, the circuit is cut off, the conduction between the positive electrode sheet 1 and the negative electrode sheet 2 due to the breakage of the diaphragm 3 can be prevented, and the local heat can be prevented from diffusing to other portions. Thus, the thermal runaway can be prevented.

Furthermore, since in this embodiment of the present application, the first conductive layer 524 of the conductive layer 52 that is in contact with the support layer 51 is the granular conductive layer 521, the granular conductive layer 521 is more easily shrunk with the support layer 51 when the support layer 51 is heated and shrinks than other conductive structures. Therefore, the circuit is more rapidly cut off and a thermal runaway is prevented more timely in the event of a short-circuit accident, so that the safety performance can be improved more effectively.

It can be seen that, by configuring the current collector 5 to include the support layer 51 and the conductive layer 52 and configuring the first conductive layer 524 of the conductive layer 52, which is in contact with the support layer 51, as the granular conductive layer 521, a thermal runaway can be prevented more efficiently and reliably, so that an effective improvement in safety performance can be achieved.

The granular conductive layer 521 may be composed of conductive particles of various metals or nonmetals. For example, with reference to Fig. 5, the granular conductive layer 521 includes a metal particle layer 523.

Since metal has good electrical conductivity, when the granular conductive layer 521 includes the metal particle layer 523, the electrical conductivity of the current collector 5 can be taken into account while a thermal runaway is effectively prevented, so that the current collector 5 has good electrical conductivity and can efficiently conduct electricity in a normal operation state without a short circuit.

As an example of the metal particle layer 523, the metal particle layer 523 includes a copper particle layer, an aluminum particle layer, a gold particle layer, a silver particle layer, or an alloy particle layer. The metal material such as copper, aluminum, gold, silver or an alloy is a metal material having good electrical conductivity, and therefore the electrical conductivity of the current collector 5 can be effectively improved.

In some embodiments, a resistivity of an alloy in the alloy particle layer is less than or equal to 30 · 10⁻⁰*Ω* · *m* (ohm-meter). As such, the alloy particle layer is more conductive and may provide the current collector 5 with a better conductivity performance.

The first conductive layer 524 and the support layer 51 may be combined in various manners. As an example, the first conductive layer 524 may be sprayed on the support layer 51.

The spraying manner is more suitable for the granular state of the granular conductive layer 521 in the first conductive layer 524, so that the granular conductive layer 521 can be easily composited on the support layer 51. After the spraying, the granular conductive layer 521 can be firmly attached to the support layer 51. In one aspect, the support layer 51 can easily drive the granular conductive layer 521 to melt and shrink with it when the support layer 51 locally melts, so that the current collector 5 can easily cut off the circuit when a short-circuit accident occurs. In another aspect, it is also advantageous to prevent the granular conductive layer 521 from accidentally falling off when in a non-short circuit state. This allows the current collector 5 to more reliably collect and transfer current during normal operation.

With reference to Fig. 5, the conductive layer 52 includes not only the first conductive layer 524, but also a second conductive layer 525 that is electrically connected to a surface of the granular conductive layer 521 facing away from the support layer 51.

Since the second conductive layer 525 can further improve the ability of the conductive layer 52 to conduct electricity, further adding the second conductive layer 525 on the basis of the first conductive layer 524 can more effectively improve the ability to conduct electricity of the current collector 5.

The second conductive layer 525 and the first conductive layer 524 may be combined in various manners. As an example, the second conductive layer 525 may be bonded to the first conductive layer 524. For example, the second conductive layer 525 may be bonded to the first conductive layer 524 with a conductive agent and an adhesive. On this basis, it is easy to connect the first conductive layer 524 to the second conductive layer 525, and the connection firmness is strong. At the same time, the electrical connection relationship between the second conductive layer 525 and the first conductive layer 524 is easy to realize.

In addition, the second conductive layer 525 may have various structures. For example, with reference to Fig. 5, in some embodiments, the second conductive layer 525 includes a graphite layer 522. Because graphite is much more conductive than other non-metallic conductive materials, configuring the second conductive layer 525 to include the graphite layer 522 may more effectively improve the conductivity performance of conductive layer 52.

In some embodiments, a conductivity of conductive layer 52 is 10⁴~10⁵*S*/*cm* (Siemens per centimeter). In this case, the conductive layer 52 can better satisfy the conductivity requirements of the current collector 5, and can effectively prevent the battery cell 20 from generating excessive heat during a conventional charging or a discharging process.

In the above embodiments, the support layer 51 is configured to support the conductive layer 52, and in the event of a short-circuit accident, to cause the conductive layer 52 to shrink with it to cut off the failure circuit and prevent a thermal runaway.

A melting point of the support layer 51 may be less than or equal to 120 °C. On this basis, the support layer 51 is more likely to melt and shrink before other portions are melted, cutting off the failure circuit. Therefore, a thermal runaway can be more reliably prevented and the safety performance can be more effectively improved.

In some embodiments, the support layer 51 is made of an organic polymer material such as polyethylene, polypropylene, or polyurethane. The organic polymer material such as polyethylene, polypropylene or polyurethane has the characteristics that the melting point is low and the heated portion can rapidly shrink and collapse when heated locally. Therefore, the support layer 51 made of the organic polymer material can rapidly cut off the failure circuit when necessary, prevent a thermal runaway and improve the safety performance.

In addition, the support layer 51 may have various shapes, for example, a granular shape or a non-granular shape. For example, with reference to Fig. 5, the support layer 51 is in a form of a film, in which case the support layer 51 is a support film 511. The support film 511 can better support the conductive layer 52, so that the current collector 5 has not only good safety performance but also strong structural stability.

With further reference to Fig. 5, in some embodiments, the support layer 51 is a polyethylene film 512. At this time, the support layer 51 is a support film 511 made of a polyethylene material, which not only can effectively prevent a thermal runaway, but also improve bending resistance of the current collector 5.

Next, the embodiment shown in Fig. 5 will be explained.

As shown in Fig. 5, in this embodiment, the current collector 5 includes the support layer 51 and two conductive layers 52 arranged on two opposite sides of the support layer 51. Each of the conductive layers 52 includes the first conductive layer 524 and the second conductive layer 525.

The support layer 51 is specifically the polyethylene film 512. The first conductive layer 524 is specifically the metal particle layer 523. The second conductive layer 525 is specifically the graphite layer 522.

A polyethylene film 512 is positioned in the middle. The two opposite sides of the polyethylene film 512 are both sprayed with a metal particle layer 523. An outer surface of the metal particle layer 523 on each side is bonded with a graphite layer 522. The graphite layer 522 is bonded to a surface of the metal particle layer 523 facing away from the polyethylene film 512 by a conductive agent and an adhesive. The surface of the graphite layer 522 facing away from the metal particle layer 523 becomes the outer surface of the conductive layer 52 for carrying the active material 6. In the fabrication of the electrode sheet 4, the active material 6 is coated on the outer surface of the graphite layer 522, so that the surfaces of the current collector 5 on both opposite sides are coated with the active material 6.

On the basis of the above arrangement, the current collector 5 forms a five-layer structure, in which the polyethylene film 512 is in the middle, and the metal particle layers 523 as well as the graphite layers 522 are symmetrically arranged on both sides of the polyethylene film 512.

The metal particle layer 523 and the graphite layer 522 mainly function to conduct electricity. The conductivity of the conductive layer 52 composed of the metal particle layer 523 and the graphite layer 522 can be maintained within the range of 10⁴~10⁵*S*/*cm* (Siemens per centimeter), which can better meet the conductivity requirements of the current collector 5, and effectively prevent the battery cell 20 from generating excessive heat during a conventional charging or discharging process due to the great electric resistivity of the current collector 5.

The polyethylene film 512 supports the metal particle layer 523 and the graphite layer 522, improves the bending resistance of the current collector 5, and improves the safety performance of the current collector 5.

How the safety performance of the current collector 5 in this embodiment is improved is explained with respect to an example of a puncture failure shown in Fig. 6. A simplified drawing of the metal particle layer 523 is shown in Fig. 6.

With reference to Fig. 6, in combination with Fig. 4, when the puncture needle 71 pierces the positive electrode sheet, the negative electrode sheet and the diaphragm 3, the puncture needle 71 conducts the current collector 5 of the positive electrode sheet 1 and the current collector 5 of the negative electrode sheet 2. An extremely high current passes through the failure position, resulting in an extremely high temperature at the failure position. In this case, if the current collector 5 is a metal current collector, the melting point of the metal current collector is higher than that of other materials. Therefore, the active material 6 or other components such as the diaphragm 3 may be caused to fail, resulting in a thermal runaway. The current collector 5 in this embodiment is no longer a single-layer metal foil structure, but instead it is a five-layer structure including the polyethylene film 512, the metal particle layers 523 and the graphite layers 522. The portion of the polyethylene film 512 around the puncture needle 71 for supporting the metal particle layers 523 and the graphite layers 522 can rapidly melt and shrink in the increasing process of the temperature at the failure position, driving the metal particle layers 523 and the graphite layers 522 on the corresponding portions of the polyethylene film 512 to shrink with it, so that the portion of the current collector 5 around the puncture needle 71 rapidly collapses to form the hole 526. The formed hole 526 can cut off the electrical connection between the puncture needle 71 and the current collector 5. The failure circuit is cut off. Therefore, the further diffusion of the electrochemical reaction inside the battery and the internal short circuit can be effectively prevented, and the thermal runaway can be prevented, so that the safety performance can be effectively improved.

Since the metal particle layer 523 is granular, the bonding tightness between the metal particles is low as compared with the case of non-granular metal foil or the like. The connection between metal particles are easily broken at a high temperature. When the polyethylene film 512 is melted and shrinks, the metal particle layer 523 can easily shrink with it, facilitating the current collector 5 to cut off the failure circuit more rapidly. Therefore, it is advantageous for a more reliable prevention of a thermal runaway, thereby more effectively improving the safety performance.

The current collector 5 may be the current collector 5 of the positive electrode sheet 1 or the current collector 5 of the negative electrode sheet 2. When the current collector 5 is the current collector 5 of the positive electrode sheet 1, the metal particle layer 523 may be an aluminum particle layer made of powdered aluminum. When the current collector 5 is the current collector 5 of the negative electrode sheet 2, the metal particle layer 523 may be a copper particle layer made of powdered copper.

## Claims

1. A current collector (5) comprising:
a support layer (51); and
a conductive layer (52) on at least one of two opposite sides of the support layer (51),
wherein when the support layer (51) is heated and shrinks, the conductive layer (52) shrinks with the support layer (51) to form a hole (526) around a heated portion,
the support layer (51) is made of an organic polymer material, the conductive layer (52) comprises a first conductive layer (524) in contact with the support layer (51) and a second conductive layer (525) electrically connected to a surface of the granular conductive layer (521) facing away from the support layer (51), the first conductive layer (524) is a granular conductive layer (521), the granular conductive layer (521) comprises a metal particle layer (523), and the second conductive layer (525) comprises a graphite layer (522).

2. The current collector (5) according to claim 1, wherein the conductive layer (52) is configured so that:
a conductivity of the conductive layer (52) is 10⁴~10⁵*S*/*cm*; and/or
the first conductive layer (524) is sprayed on the support layer (51).

3. The current collector (5) according to claim 1, wherein the metal particle layer (523) comprises a copper particle layer, an aluminum particle layer, a gold particle layer, a silver particle layer, or an alloy particle layer.

4. The current collector (5) according to claim 3, wherein a resistivity of an alloy in the alloy particle layer is less than or equal to 30 · 10⁻⁹*Ω* ·*m*.

5. The current collector (5) according to any one of claims 1 to 4, wherein the second conductive layer (525) is bonded to the first conductive layer (524).

6. The current collector (5) according to any one of claims 1 to 5, wherein the support layer (51) is configured so that:
a melting point of the support layer (51) is less than or equal to 120 °C; and/or
the support layer (51) is a support film (511).

7. The current collector (5) according to claim 6, wherein the support layer (51) is a polyethylene film (512).

8. An electrode sheet (4) comprising an active material (6) and further comprising the current collector (5) according to any one of claims 1 to 7, the active material (6) being arranged on a surface of the current collector (5).

9. An electrode assembly (201) comprising:
a positive electrode sheet (1); and
a negative electrode sheet (2);
wherein the positive electrode sheet (1) and/or the negative electrode sheet (2) are the electrode sheet (4) according to claim 8.

10. A battery cell (20) comprising a housing (202) and further comprising the electrode assembly (201) according to claim 9, the electrode assembly (201) being arranged in the housing (202).

11. A battery (10) comprising a receiving case (30) and further comprising the battery cell (20) according to claim 10, the battery cell (20) being arranged in the receiving case (30).

12. An electric apparatus (100) comprising the battery (10) according to claim 11 or the battery cell (20) according to claim 10, the battery cell (20) being configured to provide power to the electric apparatus (100).

## Patentansprüche

1. Stromkollektor (5), umfassend:
eine Trägerschicht (51); und
eine leitende Schicht (52) auf mindestens einer von zwei gegenüberliegenden Seiten der Trägerschicht (51),
wobei, wenn die Trägerschicht (51) erwärmt wird und schrumpft, die leitende Schicht (52) mit der Trägerschicht (51) schrumpft, um ein Loch (526) um einen erhitzten Abschnitt herum zu bilden,
die Trägerschicht (51) aus einem organischen Polymermaterial hergestellt ist, die leitende Schicht (52) eine erste leitende Schicht (524) in Kontakt mit der Trägerschicht (51) und eine zweite leitende Schicht (525) umfasst, die elektrisch mit einer Oberfläche der granularen leitenden Schicht (521), die von der Trägerschicht (51) abgewandt ist, verbunden ist, die erste leitende Schicht (524) eine granulare leitende Schicht (521) ist, die granulare leitende Schicht (521) eine Metallpartikelschicht (523) umfasst und die zweite leitende Schicht (525) eine Graphitschicht (522) umfasst.

2. Stromkollektor (5) nach Anspruch 1, wobei die leitende Schicht (52) so konfiguriert ist, dass:
eine Leitfähigkeit der leitenden Schicht (52) 10⁴~10⁵*S*/*cm* beträgt; und/oder
die erste leitende Schicht (524) auf die Trägerschicht (51) aufgesprüht ist.

3. Stromkollektor (5) nach Anspruch 1, wobei die Metallpartikelschicht (523) eine Kupferpartikelschicht, eine Aluminiumpartikelschicht, eine Goldpartikelschicht, eine Silberpartikelschicht oder eine Legierungspartikelschicht umfasst.

4. Stromkollektor (5) nach Anspruch 3, wobei ein spezifischer Widerstand einer Legierung in der Legierungspartikelschicht kleiner oder gleich 30 · 10⁻⁹*Ω* · *m* ist.

5. Stromkollektor (5) nach einem der Ansprüche 1 bis 4, wobei die zweite leitende Schicht (525) mit der ersten leitenden Schicht (524) gebondet ist.

6. Stromkollektor (5) nach einem der Ansprüche 1 bis 5, wobei die Trägerschicht (51) so konfiguriert ist, dass:
ein Schmelzpunkt der Trägerschicht (51) kleiner oder gleich 120 °C ist; und/oder
die Trägerschicht (51) eine Trägerfolie (511) ist.

7. Stromkollektor (5) nach Anspruch 6, wobei die Trägerschicht (51) eine Polyethylenfolie (512) ist.

8. Elektrodenplatte (4), umfassend ein aktives Material (6) und ferner umfassend den Stromkollektor (5) nach einem der Ansprüche 1 bis 7, wobei das aktive Material (6) auf einer Oberfläche des Stromkollektors (5) angeordnet ist.

9. Elektrodenbaugruppe (201), umfassend:
eine positive Elektrodenplatte (1); und
eine negative Elektrodenplatte (2);
wobei die positive Elektrodenplatte (1) und/oder die negative Elektrodenplatte (2) die Elektrodenplatte (4) nach Anspruch 8 sind.

10. Batteriezelle (20), umfassend ein Gehäuse (202) und ferner umfassend die Elektrodenbaugruppe (201) nach Anspruch 9, wobei die Elektrodenbaugruppe (201) in dem Gehäuse (202) angeordnet ist.

11. Batterie (10), umfassend ein Aufnahmegehäuse (30) und ferner umfassend die Batteriezelle (20) nach Anspruch 10, wobei die Batteriezelle (20) in dem Aufnahmegehäuse (30) angeordnet ist.

12. Elektrische Vorrichtung (100), umfassend die Batterie (10) nach Anspruch 11 oder die Batteriezelle (20) nach Anspruch 10, wobei die Batteriezelle (20) dazu konfiguriert ist, der elektrischen Vorrichtung (100) Leistung bereitzustellen.

## Revendications

1. Collecteur de courant (5) comprenant :
une couche de support (51) ; et
une couche conductrice (52) sur au moins un de deux côtés opposés de la couche de support (51),
dans lequel, lorsque la couche de support (51) est chauffée et se rétracte, la couche conductrice (52) se rétracte avec la couche de support (51) pour former un trou (526) autour d'une portion chauffée,
la couche de support (51) étant constituée d'un matériau polymère organique, la couche conductrice (52) comprenant une première couche conductrice (524) en contact avec la couche de support (51) et une seconde couche conductrice (525) reliée électriquement à une surface de la couche conductrice granulaire (521) tournée à l'opposé de la couche de support (51), la première couche conductrice (524) étant une couche conductrice granulaire (521), la couche conductrice granulaire (521) comprenant une couche de particules métalliques (523), et la seconde couche conductrice (525) comprenant une couche de graphite (522).

2. Collecteur de courant (5) selon la revendication 1, dans lequel la couche conductrice (52) est configurée de sorte que :
une conductivité de la couche conductrice (52) soit comprise entre 10⁴ et 10⁵*S*/*cm* ; et/ou
la première couche conductrice (524) soit pulvérisée sur la couche de support (51).

3. Collecteur de courant (5) selon la revendication 1, dans lequel la couche de particules métalliques (523) comprend une couche de particules de cuivre, une couche de particules d'aluminium, une couche de particules d'or, une couche de particules d'argent ou une couche de particules d'alliage.

4. Collecteur de courant (5) selon la revendication 3, dans lequel une résistivité d'un alliage dans la couche de particules d'alliage est inférieure ou égale à 30 · 10⁻⁹*Ω* · *m*.

5. Collecteur de courant (5) selon l'une quelconque des revendications 1 à 4, dans lequel la seconde couche conductrice (525) est liée à la première couche conductrice (524).

6. Collecteur de courant (5) selon l'une quelconque des revendications 1 à 5, dans lequel la couche de support (51) est configurée de sorte que :
un point de fusion de la couche de support (51) soit inférieur ou égal à 120 °C ; et/ou
la couche de support (51) soit un film de support (511).

7. Collecteur de courant (5) selon la revendication 6, dans lequel la couche de support (51) est un film de polyéthylène (512).

8. Plaque d'électrode (4) comprenant un matériau actif (6) et comprenant en outre le collecteur de courant (5) selon l'une quelconque des revendications 1 à 7, le matériau actif (6) étant agencé sur une surface du collecteur de courant (5).

9. Ensemble électrode (201) comprenant :
une plaque d'électrode positive (1) ; et
une plaque d'électrode négative (2) ;
dans lequel la plaque d'électrode positive (1) et/ou la plaque d'électrode négative (2) est la plaque d'électrode (4) selon la revendication 8.

10. Élément de batterie (20) comprenant un boîtier (202) et comprenant en outre l'ensemble électrode (201) selon la revendication 9, l'ensemble électrode (201) étant agencé dans le boîtier (202).

11. Batterie (10) comprenant un boîtier de réception (30) et comprenant en outre l'élément de batterie (20) selon la revendication 10, l'élément de batterie (20) étant agencé dans le boîtier de réception (30).

12. Dispositif électrique (100) comprenant la batterie (10) selon la revendication 11 ou l'élément de batterie (20) selon la revendication 10, l'élément de batterie (20) étant configuré pour fournir de l'énergie au dispositif électrique (100).
